# FASCICULE DE BREVET EUROPEEN

(11) **EP 3 882 855 B1**
(45) Date de publication et mention de la délivrance du brevet: **31.08.2022**
(21) Numéro de dépôt: 21162136.2
(22) Date de dépôt: 11.03.2021
(51) Int. Cl.: G06T 7/55

(54) **SYSTÈME D'ACQUISITION D'UNE CARTE DE PROFONDEUR D'UNE SCÈNE**
SYSTEM ZUM ERFASSEN EINER TIEFENKARTE EINER SZENE
SYSTEM FOR ACQUIRING A DEPTH MAP OF A SCENE

(30) Priorité: 19.03.2020 FR 2002707
(43) Date de publication de la demande: 22.09.2021
(73) Titulaire: Commissariat à l'Energie Atomique et aux Energies Alternatives, 75015 Paris (FR)
(72) Inventeur: POPOFF, Maxime, 38054 GRENOBLE CEDEX 09 (FR); PELISSON, Roland, 38054 GRENOBLE CEDEX 09 (FR)
(74) Mandataire: Cabinet Beaumont

(56) Documents cités:
- ENS J ET AL: "REAL-TIME MOTION STEREO", PROCEEDINGS OF THE COMPUTER SOCIETY CONFERENCE ON COMPUTER VISION AND PATTERN RECOGNITION. NEW YORK, JUNE 15 - 18, 1993; [PROCEEDINGS OF THE COMPUTER SOCIETY CONFERENCE ON COMPUTER VISION AND PATTERN RECOGNITION], LOS ALAMITOS, IEEE COMP. SOC. PRESS,, vol. -, 15 juin 1993 (1993-06-15), pages 130-135, XP000416308,
- SAITO H ET AL: "3D SHAPE MEASUREMENT OF UNDERWATER OBJECTS USING MOTION STEREO", PROCEEDINGS OF THE 1995 IEEE IECON: INTERNATIONAL CONFERENCE ON INDUSTRIAL ELECTRONICS, CONTROL, AND INSTRUMENTATION. ORLANDO, NOV. 6 - 10, 1995. PLENARY SESSION, INVITED SESSIONS, AND POWER ELECTRONICS; [PROCEEDINGS OF THE INTERNATIONAL CONFERENCE O, vol. 2 OF 02, 6 novembre 1995 (1995-11-06) , pages 1231-1235, XP000559363, ISBN: 978-0-7803-3027-6

## Description

### Domaine technique

La présente demande concerne le domaine des systèmes d'imagerie de façon générale, et concerne plus particulièrement le domaine de l'acquisition d'images à trois dimensions (images 3D), c'est-à-dire d'images dans lesquelles on dispose d'un ensemble de valeurs relatives à la distance entre des objets d'une scène photographiée et le dispositif d'acquisition. L'ensemble des valeurs relatives à la distance entre la scène photographiée et le dispositif d'acquisition définit une carte de profondeur de la scène. On s'intéresse ici plus particulièrement à l'acquisition d'une carte de profondeur d'une scène.

### Technique antérieure

Diverses méthodes d'acquisition d'une carte de profondeur d'une scène ont été proposées.

Parmi ces méthodes, on peut notamment citer les méthodes d'acquisition par stéréovision, dans lesquelles plusieurs images à deux dimensions (images 2D) d'une même scène, prises simultanément sous des angles de vue différents, sont utilisées pour construire une carte de profondeur de la scène.

Un inconvénient de ces méthodes réside dans le fait qu'elles requièrent plusieurs caméras pour permettre l'acquisition simultanée de plusieurs images à deux dimensions de la scène.

Il serait souhaitable de pouvoir disposer d'un système d'acquisition d'une carte de profondeur d'une scène, ce système palliant tout ou partie des inconvénients des systèmes connus.

On connaît des articles, "Real-time Motion Stereo" par Ens et Li, publié à la conférence CVPR 1993, ainsi que "3D Shape Measurement of Underwater Objects Using Motion Stereo" par Saito et al. publié à la conférence IECON 1995, l'acquisition d'images stéréoscopiques à l'aide d'une caméra unique.

### Résumé de l'invention

Pour cela, un mode de réalisation prévoit un système d'acquisition d'une carte de profondeur d'une scène, comportant une caméra montée mobile en translation selon un axe de déplacement, et un dispositif électronique de traitement et de contrôle configuré pour :
a) acquérir successivement, au moyen de la caméra, des première, deuxième et troisième images de la scène depuis respectivement des première, deuxième et troisième positions sur l'axe de déplacement ;
b) estimer la distance d'un objet par stéréoscopie à partir des première et deuxième images ;
c) rechercher ledit objet dans une zone de recherche de la troisième image, la zone de recherche étant définie en tenant compte de la distance estimée à l'étape b) ; et
d) réestimer la distance de l'objet en fonction d'une variation de la position de l'objet dans l'image entre les première et troisième images. Le dispositif électronique de traitement et de contrôle est en outre configuré pour après l'étape a), acquérir successivement, au moyen de la caméra, une série d'images additionnelles de la scène depuis respectivement des positions successives distinctes, et à chaque acquisition d'une image par la caméra, mettre en oeuvre un algorithme de détection d'objets dans l'image, réitérer, pour chaque objet détecté, les étapes b), c) et d), pour chaque objet détecté, mémoriser, dans une table de suivi des objets, une valeur d'ancienneté correspondant au rang de la première image dans laquelle l'objet a été détecté et une information représentative de la position de l'objet dans l'image dans laquelle l'objet a été détecté pour la première fois, et affecter à l'objet une valeur de profondeur fonction de la variation de la position de l'objet dans l'image entre la première image dans laquelle l'objet a été détecté et l'image courante.

Selon un mode de réalisation, le dispositif électronique de traitement et de contrôle est configuré pour, à l'étape b), estimer la distance de l'objet en fonction d'une variation de la position de l'objet dans l'image entre les première et deuxième images.

Selon un mode de réalisation, le dispositif électronique de traitement et de contrôle est configuré pour, après l'étape a), acquérir successivement, au moyen de la caméra, une série d'images additionnelles de la scène depuis respectivement des positions successives distinctes sur l'axe de déplacement.

Selon un mode de réalisation, le dispositif électronique de traitement et de contrôle est configuré pour, à chaque acquisition d'une image additionnelle de la scène :
- rechercher ledit objet dans une zone de recherche de l'image additionnelle, la zone de recherche étant définie en tenant compte de la distance préalablement estimée pour ledit objet ;
   et
- réestimer la distance de l'objet en fonction d'une variation de la position de l'objet dans l'image entre la première image et l'image additionnelle.

Selon un mode de réalisation, l'axe de déplacement est un axe latéral, c'est-à-dire parallèle au plan d'acquisition de la caméra.

Selon un mode de réalisation, l'axe de déplacement est non parallèle au plan d'acquisition de la caméra.

Un autre mode de réalisation prévoit une méthode d'acquisition d'une carte de profondeur d'une scène, au moyen d'une caméra montée mobile en translation selon un axe de déplacement, et d'un dispositif électronique de traitement et de contrôle, comprenant les étapes suivantes :
a) acquérir successivement, au moyen de la caméra, des première, deuxième et troisième images de la scène depuis respectivement des première, deuxième et troisième positions sur l'axe de déplacement ;
b) estimer, au moyen du dispositif électronique de traitement et de contrôle, la distance d'un objet par stéréoscopie à partir des première et deuxième images ;
c) rechercher, au moyen du dispositif électronique de traitement et de contrôle, ledit objet dans une zone de recherche de la troisième image, la zone de recherche étant définie en tenant compte de la distance estimée à l'étape b) ; et
d) réestimer , au moyen du dispositif électronique de traitement et de contrôle, la distance de l'objet en fonction d'une variation de la position de l'objet dans l'image entre les première et troisième images. La méthode comprend en outre les étapes suivantes : après l'étape a), acquérir successivement, au moyen de la caméra, une série d'images additionnelles de la scène depuis respectivement des positions successives distinctes, et à chaque acquisition d'une image par la caméra, mettre en œuvre, au moyen du dispositif électronique de traitement et de contrôle, un algorithme de détection d'objets dans l'image, pour chaque objet détecté, réitérer les étapes b), c) et d), pour chaque objet détecté, mémoriser, au moyen du dispositif et de contrôle, dans une table de suivi des objets, une valeur d'ancienneté correspondant au rang de la première image dans laquelle l'objet a été détecté et une information représentative de la position de l'objet dans l'image dans laquelle l'objet a été détecté pour la première fois, et affecter, au moyen du dispositif électronique de traitement et de contrôle, à l'objet une valeur de profondeur fonction de la variation de la position de l'objet dans l'image entre la première image dans laquelle l'objet a été détecté et l'image courante.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente de façon schématique le fonctionnement d'un système d'acquisition d'une carte de profondeur d'une scène selon un mode de réalisation ;
la figure 2 représente une série d'images illustrant le fonctionnement du système d'acquisition de la figure 1 ; et
la figure 3 est un logigramme illustrant, sous forme de blocs, un exemple d'une méthode d'acquisition d'une carte de profondeur d'une scène selon un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la réalisation du dispositif d'acquisition d'images 2D (caméra) et des dispositifs de contrôle et de traitement du système décrit n'a pas été détaillée, la réalisation de ces éléments étant à la portée de la personne du métier à partir des indications fonctionnelles de la présente description.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

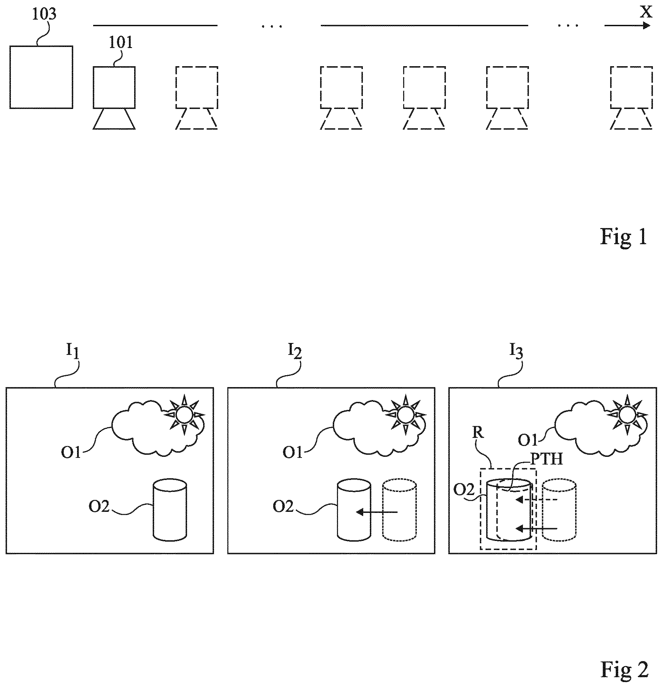

La figure 1 représente de façon schématique le fonctionnement d'un système d'acquisition d'une carte de profondeur d'une scène selon un mode de réalisation.

Le système de la figure 1 comprend une unique caméra ou capteur d'images 2D 101 montée mobile en translation selon un axe de déplacement X. L'axe de déplacement X est, dans cet exemple, un axe de déplacement latéral, c'est-à-dire parallèle au plan d'acquisition de la caméra 101. A titre d'exemple, la caméra 101 est montée mobile sur un rail motorisé, non représenté, pour permettre un déplacement latéral selon l'axe X. A titre de variante, la caméra 101 peut être montée fixe sur un véhicule, par exemple un véhicule automobile, ou un drone, l'axe X correspondant alors à la direction de déplacement du véhicule.

On prévoit ici d'acquérir successivement, au moyen de la caméra 101, une pluralité d'images d'une même scène depuis des positions successives distinctes sur l'axe de déplacement X. Plus particulièrement, on prévoit d'acquérir successivement, au moyen de la caméra 101, au moins trois images de la scène depuis respectivement trois positions distinctes sur l'axe de déplacement X. De préférence, le nombre d'images acquises successivement par la caméra 101 depuis des positions distinctes sur l'axe X est supérieur à trois. Sur la figure 1, différentes positions d'acquisition de la caméra 101 ont été représentées schématiquement en traits interrompus.

On peut ainsi construire en temps réel une carte de profondeur d'une scène évolutive, c'est-à-dire susceptible de comporter des éléments ou objets mobiles, en bénéficiant à la fois d'une résolution en profondeur élevée pour les objets fixes, et d'une grande réactivité de détection pour les objets en mouvement. Pour cela, un suivi incrémental des objets sur une pluralité de prises de vues est mis en oeuvre, permettant de calculer avec précision la distance des objets fixes, et avec moins de précision mais avec un temps de détection court, la distance des objets en mouvement.

Le système d'acquisition de la figure 1 comporte un dispositif électronique de traitement et de contrôle 103 adapté à commander les acquisitions d'images 2D successives par la caméra 101, et à mettre en oeuvre, à partir des images 2D acquises, l'algorithme incrémental de construction de carte de profondeur décrit ci-après. Le dispositif de traitement et de contrôle peut notamment comporter tout dispositif électronique de traitement de signal approprié, par exemple un microprocesseur et/ou un ou plusieurs circuits mémoire.

La figure 2 représente une série de trois images 2D I₁, I₂ et I₃ successivement acquises par la caméra 101. De préférence, le délai entre deux prises de vues consécutives est fixe. Connaissant la vitesse de déplacement de la caméra 101 selon l'axe X, on connaît l'espacement entre les prises de vues. Le délai entre deux prises de vues consécutives par la caméra 101 est de préférence choisi suffisamment court pour pouvoir considérer que la scène n'a pas sensiblement évolué entre les deux prises de vues. Autrement dit, le délai entre deux prises de vues consécutives par la caméra 101 est de préférence choisi tel que la variation de la position d'un objet dans l'image entre les deux prises de vues liée à la vitesse de l'objet soit négligeable par rapport à la variation de la position de l'objet dans l'image liée au déplacement de la caméra.

Bien que l'on ait représenté seulement trois images I₁, I₂, I₃ sur la figure 2, en pratique, le nombre N d'images acquises peut être bien supérieur à 3. A titre d'exemple, des images peuvent être acquises à intervalles de temps réguliers pendant toute la durée de déplacement de la caméra 101.

A chaque acquisition d'une image Iₙ, avec n entier allant de 1 à N, le dispositif électronique de traitement et de contrôle du système d'acquisition met en oeuvre un algorithme de détection d'objets ou de contours dans l'image Iₙ. L'algorithme de détection d'objets ou de contours ne sera pas détaillé ici, les modes de réalisation décrits étant compatibles avec tous ou la plupart des algorithmes connus de détection d'objets ou de contours dans une image.

Une fois les images I₁ et I₂ acquises, le dispositif électronique de traitement et de contrôle 103 détermine une première carte de profondeur par stéréoscopie à partir de ces deux premières images. Pour cela, pour chaque objet détecté dans l'image I₁, le dispositif électronique de traitement et de contrôle 103 recherche s'il existe un objet correspondant dans l'image I₂. Si un objet correspondant existe dans l'image I₂, il affecte à l'objet une valeur de profondeur (ou distance à la caméra d'acquisition 101), fonction de la variation de la position de l'objet dans l'image entre les images I₁ et I₂. L'ensemble des valeurs de profondeur affectées aux objets détectés constitue une carte de profondeur de la scène.

A titre d'exemple, le dispositif électronique de traitement et de contrôle mémorise chaque objet détecté dans une table de suivi des objets, et affecte à chaque objet une valeur d'ancienneté correspondant au rang n de la première image dans laquelle l'objet a été détecté. La position de l'objet dans l'image dans laquelle l'objet a été détecté pour la première fois peut aussi être mémorisée dans la table de suivi des objets.

Si l'on n'observe pas de variation de position de l'objet dans l'image entre les images I₁ et I₂, on peut considérer que l'objet est très éloigné de la caméra 101 (par exemple à l'infini). C'est le cas par exemple du nuage O1 représenté sur les images I₁, I₂ et I₃ de la figure 2. Si au contraire on observe une variation importante de la position de l'objet dans l'image entre les images I₁ et I₂, c'est que l'objet est relativement proche de la caméra. C'est le cas du cylindre O2 représenté sur les images I₁, I₂ et I₃ de la figure 2. Sur la figure 2, on a représenté en pointillé, sur l'image I₂, à titre illustratif, la position de l'objet O2 dans l'image I₁. La résolution en profondeur est fixée par le décalage maximal, en nombre de pixels, observable pour un objet situé au plus proche de la caméra 101, dans le champ et dans le plan focal de la caméra 101, lors des prises des vues I₁ et I₂. Si on désigne par nbpix_max ce décalage maximal, la résolution en profondeur, c'est-à-dire le nombre de valeurs distinctes de la distance objet-caméra pouvant être discriminées lors de l'analyse stéréoscopique des images I₁ et I2, est égal à nbpix_max.

En raison de l'intervalle de temps relativement court entre les prises de vues successives, le premier calcul de carte de profondeur réalisé à partir des images I₁ et I₂ présente une résolution en profondeur relativement faible.

A partir de cette première carte de profondeur, le dispositif de traitement et de contrôle détermine, pour chaque objet de la scène auquel une valeur de profondeur a été affectée, en fonction de la valeur de profondeur affectée à l'objet et de la position de l'objet dans l'image I₁ ou I₂, une zone de recherche R dans laquelle l'objet est susceptible de se trouver dans l'image I₃. Plus particulièrement, le dispositif de traitement et de contrôle commence par déterminer la position théorique PTH que devrait avoir l'objet dans l'image I₃ en considérant que la valeur de profondeur préalablement affectée à l'objet ne présente aucune erreur et que l'objet est immobile. Il détermine ensuite, à partir de la position théorique PTH, la zone de recherche R dans laquelle est susceptible de se trouver l'objet dans l'image I₃ en tenant compte des marges d'incertitude quant à la valeur de profondeur préalablement affectée à l'objet et à la vitesse de déplacement éventuelle de l'objet. Sur la figure 2, on a représenté sur l'image I₃, par un cylindre en traits interrompus, la position théorique PTH de l'objet O2, et par un rectangle en traits interrompus encadrant le cylindre PTH, la zone de recherche R de l'objet O2.

Une fois l'image I₃ acquise, le dispositif électronique de traitement et de contrôle 103 détermine, pour chaque objet détecté dans l'image I₂, s'il existe un objet correspondant dans l'image I₃. La recherche de correspondance est toutefois limitée à la zone de recherche R déterminée en fonction de la valeur de profondeur préalablement affectée à l'objet. Ceci permet de limiter significativement la complexité de l'étape de recherche de correspondances, et le risque d'erreur (fausse correspondance) lors de cette étape. En effet, la zone de recherche peut avoir des dimensions très limitées par rapport aux dimensions de l'image. Ceci permet de simplifier considérablement l'algorithme de recherche de l'objet par rapport à une recherche classique dans une image complète. Si l'objet a été détecté pour la première fois dans l'image I₂, la recherche peut être réalisée dans la totalité de l'image I₃, ou dans une zone de l'image I₃ définie arbitrairement en fonction de la seule position de l'objet dans l'image I₂.

Si un objet correspondant à un objet préalablement détecté dans l'image I₂ est détecté dans l'image I₃, le dispositif de traitement et de contrôle affecte à cet objet une valeur de profondeur fonction de la variation de la position de l'objet dans l'image entre la première image dans laquelle l'objet a été détecté, et l'image courante I₃. Par exemple s'il s'agit d'un objet préalablement détecté dès l'image I₁, la valeur de profondeur de l'objet est mise à jour en tenant compte de la valeur de profondeur déjà attribuée à l'objet à l'issue de l'acquisition de l'image I₂, et de la variation de position de l'objet dans l'image entre les images I₂ et I₃. Si l'objet a été détecté pour la première fois dans l'image I₂, une valeur de profondeur est affectée à l'objet, en fonction de la variation de la position de l'objet dans l'image entre les images I₂ et I₃.

La carte de profondeur est ainsi mise à jour, en augmentant la résolution des valeurs de profondeur calculées à partir des images I₁ et I₂, et/ou en attribuant des valeurs de profondeur peu résolues aux objets qui auraient été détectés pour la première fois dans l'image I₂.

Le dispositif électronique de traitement et de contrôle mémorise dans la table de suivi des objets les éventuels nouveaux objets détectés dans l'image I₃, et leur affecte une valeur d'ancienneté correspondant au rang n=3 de l'image I₃.

Ce processus peut être répété à chaque nouvelle acquisition d'une image par la caméra 101, de façon à améliorer la résolution des objets les plus anciens dans l'image, tout en permettant de détecter et d'estimer rapidement la profondeur (avec une résolution plus faible) des objets récemment apparus dans l'image.

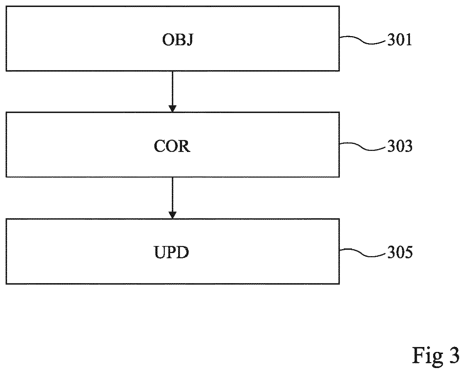

La figure 3 illustre sous forme de blocs des étapes successives d'un exemple d'un procédé mis en oeuvre par le dispositif de traitement et de contrôle 103 du système de la figure 1 à chaque acquisition d'une image Iₙ par la caméra 101.

Lors d'une étape 301 (OBJ), un algorithme de détection des objets présents dans l'image Iₙ est mis en oeuvre.

Lors d'une étape 303 (COR), pour chaque objet détecté dans l'image Iₙ₋₁, une recherche d'un objet correspondant dans l'image Iₙ est mise en oeuvre. Si une valeur de profondeur a déjà été attribuée à l'objet, c'est-à-dire si l'objet avait déjà été détectée dans l'image Iₙ₋₂ ou dans une image précédente, la recherche d'objet correspondant est limitée à une zone de recherche R de l'image Iₙ, déterminée en fonction de la valeur de profondeur attribuée à l'objet et de la position de l'objet dans une image précédente. Si aucune valeur de profondeur n'a encore été affectée à l'objet, c'est-à-dire si l'objet a été détecté pour la première fois dans l'image Iₙ₋₁, la recherche peut être réalisée dans la totalité de l'image Iₙ, ou dans une zone de l'image Iₙ déterminée arbitrairement en fonction de la seule position de l'objet dans l'image Iₙ₋₁.

Lors de l'étape 303, les objets détectés pour la première fois dans l'image Iₙ, c'est-à-dire ne correspondant pas à des objets préalablement détectés dans l'image Iₙ₋₁, sont mémorisés dans la table de suivi des objets et se voient attribuer une valeur d'ancienneté correspondant au rang n de l'image courante.

Lors d'une étape 305 (UPD), la carte de profondeur de la scène est mise à jour. Plus particulièrement, pour chaque objet détecté dans l'image Iₙ₋₁ ayant une correspondance dans l'image Iₙ, on détermine une valeur de profondeur fonction de la variation de la position de l'objet dans l'image entre la première image dans laquelle l'objet a été détecté, et l'image courante Iₙ. A titre d'exemple, s'il s'agit d'un objet déjà détecté dans l'image Iₙ₋₂ ou dans une image précédente, la valeur de profondeur de l'objet est mise à jour en tenant compte de sa valeur actuelle (déterminée après acquisition de l'image Iₙ₋₁) et de la variation de la position de l'objet dans l'image entre les images Iₙ₋₁ et Iₙ. S'il s'agit d'un objet détecté pour la première fois dans l'image Iₙ₋₁, une valeur de profondeur est attribuée à l'objet en tenant compte uniquement de la variation de la position de l'objet dans l'image entre les images Iₙ₋₁ et Iₙ.

Lorsqu'un objet sort du champ de la caméra 101, le dispositif de traitement et de contrôle peut interrompre le suivi de cet objet, de façon à limiter la quantité de mémoire nécessaire à la mise en oeuvre de la méthode. A titre d'exemple, si un objet détecté dans l'image Iₙ₋₁ n'est pas détecté dans l'image Iₙ, le suivi de cet objet peut être interrompu et les données correspondantes peuvent être supprimées de la table de suivi des objets. A titre de variante, on peut attendre d'avoir acquis plusieurs images successives ne contenant pas l'objet avant de retirer ce dernier de la table de suivi des objets. Ceci procure une meilleure immunité aux erreurs de détection et/ou aux erreurs de mise en correspondance susceptibles de survenir aux étapes 301 et 303.

Le procédé décrit ci-dessus permet in fine de simuler, pour chaque objet, une paire stéréoscopique allant de la prise de vue ayant détecté l'objet pour la première fois à la prise de vue ayant détecté l'objet pour la dernière fois. Plus l'espacement entre ces deux prises de vues est important, plus la mesure de profondeur de l'objet est précise. Si un nouvel objet survient dans le champ de la caméra ou change de forme, sa profondeur est calculée ou recalculée rapidement après son apparition ou changement de forme, avec une précision relativement faible. Plus l'objet persiste dans le champ de la caméra, plus sa mesure de profondeur devient précise.

La carte de profondeur générée comprend ainsi des objets d'ancienneté différentes, les mesures de profondeur des objets étant d'autant plus précises que leur ancienneté est importante.

Ainsi, le procédé proposé permet, en utilisant une caméra unique, de bénéficier à la fois de la précision résultant d'un espacement important entre les prises de vues, et de mesures rapides permettant des détections fiables des objets dans une scène évolutive.

Un autre avantage de ce procédé est que l'accumulation des prises de vues permet de réduire significativement le bruit. En particulier, les contours parasites aléatoires liés au bruit peuvent être détectés et supprimés.

Les objets de la carte de profondeur peuvent par exemple être affichés sur une image 2D, en affectant à chaque objet une couleur fonction de sa valeur de profondeur, afin de permettre à un observateur de se faire une idée de la distance des objets.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que l'on ait décrit ci-dessus des exemples de réalisation dans lesquels la caméra 101 est mobile selon un axe parallèle au plan d'acquisition, les modes de réalisation décrits ne se limitent pas à ce cas particulier. A titre de variante, la caméra 101 peut se déplacer selon un axe orthogonal au plan du capteur (déplacement frontal plutôt que latéral). Dans ce cas, une carte de profondeur peut être générée de façon similaire à ce qui a été décrit précédemment, avec un angle mort au centre de l'image. Plus généralement, la personne du métier saura adapter la solution proposée quelle que soit l'orientation de l'axe de déplacement de la caméra par rapport au plan d'acquisition ou plan focal de la caméra.

Par ailleurs, on a décrit ci-dessus des exemples de réalisation dans lesquels on prévoit un intervalle de temps relativement court entre deux acquisitions successives d'une image 2D, de façon que, pour un objet en mouvement, la variation de la position de l'objet dans l'image entre les deux prises de vues liée à la vitesse de l'objet soit négligeable par rapport à la variation de la position de l'objet dans l'image liée au déplacement de la caméra. A titre de variante, la vitesse de l'objet peut être estimée au moyen d'un algorithme de traitement vidéo, non détaillé. On peut alors coupler le résultat de l'algorithme d'estimation de vitesse à l'algorithme de génération de carte de profondeur et soustraire à la mesure de déplacement d'un objet entre deux prises de vues successives le déplacement lié à la vitesse de l'objet. On isole ainsi l'information de distance de l'information de vitesse, ce qui permet de mesurer la distance de manière plus fiable. Ceci permet en particulier de s'accommoder de situations dans lesquelles la variation de la position d'un objet dans l'image entre deux prises de vues successives liée à la vitesse de l'objet est non négligeable par rapport à la variation de la position de l'objet dans l'image liée au déplacement de la caméra.

Enfin, la mise en oeuvre pratique des modes de réalisation et variantes décrits est à la portée de la personne du métier à partir des indications fonctionnelles données ci-dessus, en particulier, pour ce qui est de l'implémentation du dispositif électronique de traitement et de contrôle 103.

## Revendications

1. Système d'acquisition d'une carte de profondeur d'une scène, comportant une caméra (101) montée mobile en translation selon un axe de déplacement (X), et un dispositif électronique de traitement et de contrôle (103) configuré pour :
a) acquérir successivement, au moyen de la caméra, des première (I₁), deuxième (I₂) et troisième (I₃) images de la scène depuis respectivement des première, deuxième et troisième positions sur l'axe de déplacement (X) ;
b) estimer la distance d'un objet (O1, O2) par stéréoscopie à partir des première (I₁) et deuxième (I₂) images ;
c) rechercher ledit objet (O1, O2) dans une zone de recherche (R) de la troisième image (I₃), la zone de recherche étant définie en tenant compte de la distance estimée à l'étape b) ; et
d) réestimer la distance de l'objet (O1, O2) en fonction d'une variation de la position de l'objet (O1, O2) dans l'image entre les première (I₁) et troisième (I₃) images;
dans lequel le dispositif électronique de traitement et de contrôle (103) est en outre configuré pour :
après l'étape a), acquérir successivement, au moyen de la caméra (101), une série d'images additionnelles (Iₙ) de la scène depuis respectivement des positions successives distinctes, et
- à chaque acquisition d'une image (I₁, I₂, I₃, Iₙ) par la caméra (101), mettre en oeuvre un algorithme de détection d'objets dans l'image, pour chaque objet détecté, réitérer les étapes b), c) et d), pour chaque objet détecté, mémoriser, dans une table de suivi des objets, une valeur d'ancienneté correspondant au rang de la première image dans laquelle l'objet a été détecté et une information représentative de la position de l'objet dans l'image dans laquelle l'objet a été détecté pour la première fois, et affecter à l'objet une valeur de profondeur fonction de la variation de la position de l'objet dans l'image entre la première image dans laquelle l'objet a été détecté et l'image courante.

2. Système selon la revendication 1, dans lequel le dispositif électronique de traitement et de contrôle (103) est configuré pour, à l'étape b), estimer la distance de l'objet (O1, O2) en fonction d'une variation de la position de l'objet (O1, O2) dans l'image entre les première (I₁) et deuxième (I₂) images.

3. Système selon la revendication 1 ou 2, dans lequel le dispositif électronique de traitement et de contrôle (103) est configuré pour, à chaque acquisition d'une image additionnelle (Iₙ) de la scène :
- rechercher ledit objet (O1, O2) dans une zone de recherche (R) de l'image additionnelle (Iₙ), la zone de recherche étant définie en tenant compte de la distance préalablement estimée pour ledit objet (O1, O2) ; et
- réestimer la distance de l'objet (O1, O2) en fonction d'une variation de la position de l'objet (O1, O2) dans l'image entre la première image (I₁) et l'image additionnelle (Iₙ).

4. Système selon l'une quelconque des revendications 1 à 3, dans lequel l'axe de déplacement (X) est un axe latéral, c'est-à-dire parallèle au plan d'acquisition de la caméra (101) .

5. Système selon l'une quelconque des revendications 1 à 3, dans lequel l'axe de déplacement (X) est non parallèle au plan d'acquisition de la caméra (101).

6. Méthode d'acquisition d'une carte de profondeur d'une scène, au moyen d'une caméra (101) montée mobile en translation selon un axe de déplacement (X), et d'un dispositif électronique de traitement et de contrôle (103), comprenant les étapes suivantes :
a) acquérir successivement, au moyen de la caméra, des première (I₁), deuxième (I₂) et troisième (I₃) images de la scène depuis respectivement des première, deuxième et troisième positions sur l'axe de déplacement (X) ;
b) estimer, au moyen du dispositif électronique de traitement et de contrôle (103), la distance d'un objet (O1, O2) par stéréoscopie à partir des première (I₁) et deuxième (I₂) images ;
c) rechercher, au moyen du dispositif électronique de traitement et de contrôle (103), ledit objet (O1, O2) dans une zone de recherche (R) de la troisième image (I₃), la zone de recherche étant définie en tenant compte de la distance estimée à l'étape b) ; et
d) réestimer, au moyen du dispositif électronique de traitement et de contrôle (103), la distance de l'objet (O1, O2) en fonction d'une variation de la position de l'objet (O1, O2) dans l'image entre les première (I₁) et troisième (I₃) images;
la méthode comprenant en outre les étapes suivantes :
après l'étape a), acquérir successivement, au moyen de la caméra (101), une série d'images additionnelles (Iₙ) de la scène depuis respectivement des positions successives distinctes, et
- à chaque acquisition d'une image (I₁, I₂, I₃, Iₙ) par la caméra (101), mettre en oeuvre, au moyen du dispositif électronique de traitement et de contrôle (103), un algorithme de détection d'objets dans l'image, pour chaque objet détecté, réitérer les étapes b), c) et d), pour chaque objet détecté, mémoriser, au moyen du dispositif électronique de traitement et de contrôle (103), dans une table de suivi des objets, une valeur d'ancienneté correspondant au rang de la première image dans laquelle l'objet a été détecté et une information représentative de la position de l'objet dans l'image dans laquelle l'objet a été détecté pour la première fois, et affecter, au moyen du dispositif électronique de traitement et de contrôle (103), à l'objet une valeur de profondeur fonction de la variation de la position de l'objet dans l'image entre la première image dans laquelle l'objet a été détecté et l'image courante.

## Patentansprüche

1. System zum Akquirieren einer Tiefenkarte einer Szene, aufweisend eine Kamera (101), die so angebracht ist, dass sie entlang einer Verschiebungsachse (X) verschiebbar ist, und eine elektronischen Verarbeitungs- und Steuervorrichtung (103), die konfiguriert ist zum:
a) aufeinanderfolgenden Akquirieren mittels der Kamera eines ersten (I₁), zweiten (I₂) und dritten (I₃) Bildes der Szene von einer ersten, zweiten bzw. dritten Position auf der Verschiebungsachse (X);
b) Schätzen der Entfernung eines Objekts (O1, O2) durch Stereoskopie aus dem ersten (I₁) und zweiten (I₂) Bild;
c) Suchen des Objekts (O1, O2) in einem Suchbereich (R) des dritten Bildes (I₃), wobei der Suchbereich unter Berücksichtigung der im Schritt b) geschätzten Entfernung definiert wird; und
d) erneutes Schätzen der Entfernung des Objekts (O1, O2) gemäß einer Variation der Position des Objekts (O1, O2) in dem Bild zwischen dem ersten (I₁) und dem dritten (I₃) Bild;
wobei die elektronische Verarbeitungs- und Steuervorrichtung (103) ferner konfiguriert ist zum:
nach Schritt a) aufeinanderfolgenden Akquirieren mittels der Kamera (101) einer Reihe zusätzlicher Bilder (Iₙ) der Szene aus jeweils verschiedenen aufeinanderfolgenden Positionen, und
- für jedes akquirieren eines Bildes (I₁, I₂, I₃, Iₙ) durch die Kamera (101), Implementieren eines Algorithmus zum Erfassen von Objekten in dem Bild,
für jedes erkannte Objekt, Wiederholen der Schritte b), c) und d),
für jedes detektierte Objekt, Speichern in einer Objektverfolgungstabelle eines Alterswert, der dem Rang des ersten Bildes entspricht, in dem das Objekt detektiert wurde, und Informationen, die für die Position des Objekts in dem Bild repräsentativ sind, in dem das Objekt zum ersten Mal detektiert wurde, und Zuweisen eines Tiefenwerts zu dem Objekt, der eine Funktion der Veränderung der Position des Objekts in dem Bild zwischen dem ersten Bild, in dem das Objekt detektiert wurde, und dem aktuellen Bild ist.

2. System nach Anspruch 1, wobei die elektronische Verarbeitungs- und Steuervorrichtung (103) konfiguriert ist zum im Schritt b) Schätzen der Entfernung des Objekts (O1, O2) entsprechend einer Veränderung der Position des Objekts (O1, O2) in dem Bild zwischen dem ersten (I₁) und dem zweiten (I₂) Bild.

3. System nach Anspruch 1 oder 2, wobei die elektronische Verarbeitungs- und Steuervorrichtung (103) konfiguriert ist zum, für jede Akquisition eines zusätzlichen Bildes (Iₙ) der Szene:
- Suchen des Objekts (O1, O2) in einem Suchbereich (R) des zusätzlichen Bildes (Iₙ), wobei der Suchbereich unter Berücksichtigung der zuvor für das Objekt (O1, O2) geschätzten Entfernung definiert wird; und
- erneutes Schätzen der Entfernung des Objekts (O1, O2) entsprechend einer Änderung der Position des Objekts (O1, O2) in dem Bild zwischen dem ersten Bild (I₁) und dem zusätzlichen Bild (Iₙ).

4. System nach einem der Ansprüche 1 bis 3, wobei die Verschiebungsachse (X) eine seitliche Achse, d.h. parallel zur Aufnahmeebene der Kamera (101) ist.

5. System nach einem der Ansprüche 1 bis 3, wobei die Verschiebungsachse (X) nicht parallel zur Aufnahmeebene der Kamera (101) ist.

6. Verfahren zum Akquirieren einer Tiefenkarte einer Szene mittels einer Kamera (101), die so angebracht ist, dass sie entlang einer Verschiebungsachse (X) verschiebbar ist, und einer elektronischen Verarbeitungs- und Steuervorrichtung (103), das die folgenden Schritte aufweist:
a) aufeinanderfolgendes Akquirieren eines ersten (I₁), eines zweiten (I₂) und eines dritten (I₃) Bildes der Szene mittels der Kamera von einer ersten, einer zweiten bzw. einer dritten Position auf der Verschiebungsachse (X);
b) Schätzen, mittels der elektronischen Verarbeitungs- und Steuervorrichtung (103), der Entfernung eines Objekts (O1, O2) mittels der elektronischen Verarbeitungs- und Steuervorrichtung (103) durch Stereoskopie aus dem ersten (I₁) und zweiten (I₂) Bild;
c) Suchen, mittels der elektronischen Verarbeitungs- und Steuervorrichtung (103), des Objekts (O1, O2) in einem Suchbereich (R) des dritten Bildes (I₃), wobei der Suchbereich unter Berücksichtigung der im Schritt b) geschätzten Entfernung definiert wird; und
d) erneutes Schätzen, mittels der elektronischen Verarbeitungs- und Steuervorrichtung (103), der Entfernung des Objekts (O1, O2) gemäß einer Veränderung der Position des Objekts (O1, O2) in dem Bild zwischen dem ersten (I₁) und dem dritten (I₃) Bild;
wobei das Verfahren ferner die folgenden Schritte aufweist:
nach Schritt a), aufeinanderfolgendes Akquiriere, mittels der Kamera (101), einer Reihe von zusätzlichen Bildern (Iₙ) der Szene von jeweils verschiedenen aufeinanderfolgenden Positionen, und
- für jedes Akquirieren eines Bildes (I₁, I₂, I₃, Iₙ) durch die Kamera (101), Implementieren, mittels der elektronischen Verarbeitungs- und Steuereinrichtung (103), eines Algorithmus zum Detektieren von Objekten in dem Bild,
für jedes erfasste Objekt Wiederholen der Schritte b), c) und d),
für jedes detektierte Objekt Speichern, mittels der elektronischen Verarbeitungs- und Steuervorrichtung (103), in einer Objektverfolgungstabelle einen Alterswert, der dem Rang des ersten Bildes entspricht, in dem das Objekt detektiert wurde, und Informationen, die für die Position des Objekts in dem Bild repräsentativ sind, in dem das Objekt zum ersten Mal detektiert wurde, und Zuweisen, mittels der elektronischen Verarbeitungs- und Steuervorrichtung (103), zu dem Objekt eines Tiefenwerts, der eine Funktion der Veränderung der Position des Objekts in dem Bild zwischen dem ersten Bild, in dem das Objekt detektiert wurde, und dem aktuellen Bild ist.

## Claims

1. System for acquiring a depth map of a scene, comprising a camera (101) assembled to slidably displace along a displacement axis (X), and an electronic processing and control device (103) configured to:
a) successively acquire, by means of the camera, first (I₁), second (I₂), and third (I₃) images of the scene from respectively first, second, and third positions on the displacement axis (X);
b) estimate the distance of an object (O1, O2) by stereoscopy from the first (I₁) and second (I₂) images;
c) search for said object (O1, O2) in a search area (R) of the third image (I₃), the search area being defined by taking into account the distance estimated at step b); and
d) re-estimate the distance of the object (O1, O2) according to a variation of the position of the object (O1, O2) in the image between the first (I₁) and third (I₃) images;
wherein the electronic processing and control device (103) is further configured to:
after step a), successively acquire, by means of the camera (101), a series of additional images (Iₙ) of the scene from respectively different successive positions, and
- for each acquisition of an image (I₁, I₂, I₃, Iₙ) by the camera (101), implement an algorithm of detection of objects in the image,
for each detected object, repeat steps b), c), and d),
for each detected object, store, in an object tracking table, an age value corresponding to the rank of the first image where the object has been detected and information representative of the position of the object in the image where the object has been detected for the first time, and assigning to the object a depth value which is a function of the variation of the position of the object in the image between the first image where the object has been detected and the current image.

2. System according to claim 1, wherein the electronic processing and control device (103) is configured to, at step b), estimate the distance of the object (O1, O2) according to a variation of the position of the object (O1, O2) in the image between the first (I₁) and second (I₂) images.

3. System according to claim 1 or 2, wherein the electronic processing and control device (103) is configured to, for each acquisition of an additional image (Iₙ) of the scene:
- search for said object (O1, O2) in a search area (R) of the additional image (Iₙ), the search area being defined by taking into account the distant previously estimated for said object (O1, O2); and
- re-estimate the distance of the object (O1, O2) according to a variation of the position of the object (O1, O2) in the image between the first image (I₁) and the additional image (Iₙ).

4. System according to any of claims 1 to 3, wherein the displacement axis (X) is a lateral axis, that is, parallel to the acquisition plane of the camera (101).

5. System according to any of claims 1 to 3, wherein the displacement axis (X) is non-parallel to the acquisition plane of the camera (101).

6. Method for acquiring a depth map of a scene, by means of a camera (101) assembled to slidably displace along a displacement axis (X), and of an electronic processing and control device (103), comprising the steps of:
a) successively acquiring, by means of the camera, first (I₁), second (I₂), and third (I₃) images of the scene from respectively first, second, and third positions on the displacement axis (X);
b) estimating, by means of the electronic processing and control device (103), the distance of an object (O1, O2) by stereoscopy from the first (I₁) and second (I₂) images;
c) searching, by means of the electronic processing and control device (103), for said object (01, 02) in a search area (R) of the third image (I₃), the search area being defined by taking into account the distance estimated at step b); and
d) re-estimating, by means of the electronic processing and control device (103), the distance of the object (O1, O2) according to a variation of the position of the object (O1, O2) in the image between the first (I₁) and third (I₃) images;
the method further comprising the steps of:
after step a), successively acquiring, by means of the camera (101), a series of additional images (Iₙ) of the scene from respectively different successive positions, and
- for each acquisition of an image (I₁, I₂, I₃, Iₙ) by the camera (101), implementing, by means of the electronic processing and control device (103), an algorithm of detection of objects in the image,
for each detected object, repeating steps b), c), and d),
for each detected object, storing, by means of the electronic processing and control device (103), in an object tracking table, an age value corresponding to the rank of the first image where the object has been detected and information representative of the position of the object in the image where the object has been detected for the first time, and assigning, by means of the electronic processing and control device (103), to the object a depth value which is a function of the variation of the position of the object in the image between the first image where the object has been detected and the current image.
